# EUROPÄISCHE PATENTANMELDUNG

(11) **EP 1 230 980 A2**
(43) Veröffentlichungstag der Anmeldung: **14.08.2002**
(21) Anmeldenummer: 02090046.0
(22) Anmeldetag: 04.02.2002
(51) Int. Cl.: B01L 9/06, G01N 35/04, B01J 19/00

(54) **Vorrichtung zur Bereitstellung von Flüssigkeiten zur Beladung von Dispensionswerkzeugen**

(30) Priorität: 09.02.2001 DE 10107517
(71) Anmelder: Epigenomics AG, 10435 Berlin (DE)
(72) Erfinder: G-tig, David, 10435 Berlin (DE)
(74) Vertreter: Schubert, Klemens, Dr.

(57) **Zusammenfassung**

Beschrieben wird eine Vorrichtung zur Bereitstellung von Flüssigkeiten zur Beladung von Dispensionswerkzeugen zur Herstellung von Oligonukleotid-Chips.

Dabei handelt es sich um eine Vorrichtung zur beliebigen Anordnung nach oben offener Gefäße in einem rechtwinkligen Raster, wobei das Raster von Gefäßen an zwei gegenüber liegenden Seiten durch statische Seitenwände (B) begrenzt wird, zwischen denen es als ganzes mit den dazu senkrechten anderen beiden Seitenwänden (A) verschiebbar ist, und es mindestens eine Position gibt, an der die statischen Seitenwände an gegenüber liegenden Stellen durchbrochen sind und mindestens ein weiteres Gefäß mit einem Führungselement (C) in das Raster verschiebbar ist, welches gleichzeitig auf der gegenüber liegenden Seite zurück weicht, um das aus dem Raster herausgeschobene Gefäß aufzunehmen, und es bei Bedarf an anderer Stelle wieder in das Raster zu schieben, und somit die Gefäße sukzessiv zu permutieren.

## Beschreibung

Die Erfindung betrifft eine Vorrichtung zur Bereitstellung von Flüssigkeiten zur Beladung von Dispensionswerkzeugen zur Herstellung von Oligonukleotid-Chips.

Es ist bekannt, dass beim Herstellen von Oligonukleotid-Chips die Oligonukleotidlösungen in sogenannten Mikrotiterplatten bereitgestellt werden. Als Oligonukleotid-Chips werden im allgemeinen Glasplättchen bezeichnet, wie sie zum Beispiel als Objektträger beim Mikroskopieren verwendet werden, auf die ein definiertes Raster von Punkten mit unterschiedlichen Oligonukleotiden aufgebracht wird. Dies geschieht unter anderem in dem speziell gefertigte Nadeln auf dem Glasplättchen abgesetzt werden, die vorher durch Eintauchen in die entsprechenden Oligonukleotidlösungen durch diese benetzt wurden. Auch andere Dispensionswerkzeuge sind bekannt und werden in ähnlicher Weise genutzt. Um einen höheren Durchsatz zu erreichen, werden im allgemeinen Vorrichtungen genutzt, die mehrere Dispensionswerkzeuge aufnehmen können, und somit die Dispension von mehreren Punkten gleichzeitig erlauben. Dies macht es sinnvoll, dass die Oligonukleotidlösungen in Gefäßen bereitgestellt werden, die im gleichen Raster wie die Dispensionswerkzeuge angelegt sind, und somit ein gleichzeitiges Beladen aller Dispensionswerkzeuge gestatten. Es ist Stand der Technik, die Gefäße in einem Spritzgussteil, der Mikrotiterplatte, zusammenzufassen, was auch die automatische Befüllung und Lagerung vereinfacht. Bei einem anderen Verfahren werden die Oligonukleotide direkt auf den entsprechenden Punkten auf dem Glasplättchen synthetisiert. Alle Oligonukleotide bestehen aus Ketten von vier gleichen Grundbausteinen und unterscheiden sich nur in der Abfolge dieser Grundbausteine in der Kette. Beim Synthetisieren werden die Grundbausteine in der entsprechenden Reihenfolge auf die Punkte aufgebracht, und somit die gewünschten Abfolgen gebildet. Zwischen den einzelnen Dispensionsschritten sind noch diverse Kopplungs-, Wasch- und Entschützungsschritte nötig, die aber für alle Punkte gleich sind und deshalb gleichzeitig erfolgen können. Um auf den Punkten beliebige unterschiedliche Oligonukleotide synthetisieren zu können, ist es somit nötig, die Dispensionswerkzeuge mit einer beliebigen Kombination von Lösungen der Grundbausteine beladen zu können. Nach dem Stand der Technik sind somit alle Kombinationen der Lösungen der Grundbausteine in einer oder mehreren Mikrotiterplatten bereitzustellen. Dies führt schon bei einer moderaten Anzahl von Dispensionswerkzeugen zu einem enormen Platzbedarf und einem großen Bedarf an Lösungen von Grundbausteinen. Eine Verringerung der Anzahl der Dispensionswerkzeuge oder Abkehr von der gleichzeitigen Beladung führt auf der anderen Seite zu einer Verlängerung der Synthese, was unter anderem zu Problemen mit der endlichen Haltbarkeit der bereitgestellten Lösungen führen kann.

Der vorliegenden Erfindung liegt somit die Aufgabe zugrunde, ein Raster von Gefäßen beliebig anordnen zu können, um platzsparend und sparsam ein Raster mit einer beliebigen Kombination einer endlichen Anzahl von Flüssigkeiten zum gleichzeitigen Beladen von Dispensionswerkzeugen bereitzustellen.

Diese Aufgabe wird durch die im Hauptanspruch aufgeführten Merkmale gelöst. Vorteilhafte Weiterbildungen der erfindungsgemäßen Merkmale sind in den abhängigen Unteransprüchen gekennzeichnet.

Die Aufgabe wird also durch eine Vorrichtung zur beliebigen Anordnung nach oben offener Gefäße in einem rechtwinkligen Raster gelöst, wobei das Raster von Gefäßen an zwei gegenüber liegenden Seiten durch statische Seitenwände (B) begrenzt wird, zwischen denen es als ganzes mit den dazu senkrechten anderen beiden Seitenwänden (A) verschiebbar ist, und es mindestens eine Position gibt, an der die statischen Seitenwände an gegenüber liegenden Stellen durchbrochen sind und mindestens ein weiteres Gefäß mit einem Führungselement (C) in das Raster verschiebbar ist, welches gleichzeitig auf der gegenüber liegenden Seite zurück weicht, um das aus dem Raster herausgeschobene Gefäß aufzunehmen, und es bei Bedarf an anderer Stelle wieder in das Raster zu schieben, und somit die Gefäße sukzessiv zu permutieren.

Vorteilhaft ist es, dass das Raster als Ganzes auf einem Schlitten zwischen den statischen Seitenwänden verschiebbar ist.

Es ist weiterhin besonders vorteilhaft, dass der Schlitten mit Nuten senkrecht zu seiner Bewegungsrichtung versehen ist, und die Gefäße mit entsprechenden Stiften somit nur auf diese Bewegungsrichtung auf dem Schlitten beschränkt sind.

Ferner ist es erfindungsgemäß bevorzugt, dass die Gefäße zylindersymmetrisch sind.

Es ist ferner erfindungsgemäß bevorzugt, dass das Rastermaß des Rasters von Gefäßen dem Rastermaß eines Rasters von Dispensionswerkzeugen entspricht, welche dadurch gleichzeitig beladen werden können.

Die mit der Erfindung erzielten Vorteile bestehen insbesondere in der minimalen benötigten Anzahl von Gefäßen pro Flüssigkeit bei gleichzeitiger Beladung einer gegebenen Anzahl von Dispensionswerkzeugen mit einer beliebigen Kombination einer gegebenen Anzahl von Flüssigkeiten. Dies führt zu einer effizienten Ausnutzung der Flüssigkeiten und zu geringem Platzbedarf des Aufbaus. Des weiteren ermöglicht die Erfindung eine Erweiterung von vorhandenen Systemen zur Herstellung von Oligonukleotid-Chips mit vorsynthetisierten Oligonukleotiden zu einem System mit dem direkt auf den Glasplättchen synthetisiert werden kann.

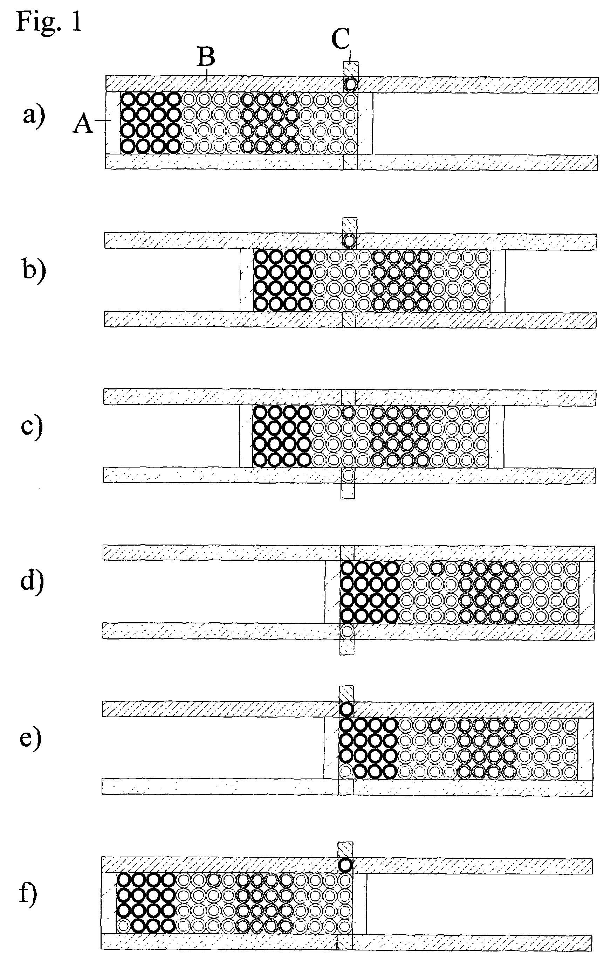

In der Fig. 1 ist eine vorteilhafte Ausgestaltung der erfindungsgemäßen Vorrichtung gezeigt.

Es bedeuten:
A - Schlitten mit Raster von Gefäßen,
B - Seitenwände zur Führung des Schlittens und seitlichen Stabilisierung der Gefäße,
C - Austauschvorrichtung in der mit einem Führungselement ein weiteres Gefäß in das Raster von Gefäßen geschoben werden kann und das auf der anderen Seite heraus geschobene Gefäß aufgenommen wird.

Ein Ausführungsbeispiel der Erfindung mit der 4 mal 4 Dispensionswerkzeuge gleichzeitig mit einer beliebigen Kombination von 4 verschiedenen Flüssigkeiten beladen werden können ist in Figur 1 in der Aufsicht dargestellt. Ein mit 64 Gefäßen bestückten Schlitten A, wird horizontal durch statische Seitenwände B geführt, die besonders bevorzugt auch für seitliche Stabilität des Rasters aus Gefäßen sorgen. Um das Raster von Gefäßen bei der Bewegung des Schlittens zu stabilisieren, sind die Gefäße bevorzugt an der Unterseite mit Stiften versehen, die in entsprechenden Nuten des Schlittens zu liegen kommen, welche senkrecht zur Bewegungsrichtung des Schlittens verlaufen. Um ein Verkanten der Gefäße zu vermeiden sind diese besonders bevorzugt zylindrisch aufgebaut. An einer Stelle C sind die statischen Seitenwände durchbrochen und durch ein Führungselement kann ein weiteres Gefäß in das Raster geschoben werden, wobei dadurch auf der gegenüberliegenden Seite aus dem Raster ein Gefäß heraus geschoben und aufgenommen wird. Die seitliche Führung des Rasters wird an dieser Stelle besonders bevorzugt auf der einen Seite durch das Führungselement und auf der anderen Seite durch das heraus geschobene Gefäß erreicht.

In der Position a) können zum Beispiel die Dispensionswerkzeuge gleichzeitig in die schwarz dargestellten Gefäße getaucht werden. Die weiteren Positionen b) bis f) zeigen eine exemplarische Abfolge, mit der die Dispensionswerkzeuge an gleicher Stelle mit einer anderen Kombination von Flüssigkeiten beladen werden können. Dazu wird der Schlitten in Position b) gebracht. Durch Bewegung des Führungselements wird in Position c) ein weißes Gefäß aus dem Raster geschoben. In Position d) wird der Schlitten repositioniert und das Gefäß durch Rückbewegung des Führungselements in Position e) an anderer Stelle wieder in das Raster geschoben. In Position f) ist der Schlitten wieder in die Ausgangsposition gebracht, wo nun die Dispensionswerkzeuge mit der neuen Kombination an Flüssigkeiten beladen werden können. Durch eine geeignete Abfolge von Bewegungen des Schlittens und des Führungselementes kann so jede Kombination der Flüssigkeiten für die Dispensionswerkzeuge bereitgestellt werden.

## Patentansprüche

1. Vorrichtung zur beliebigen Anordnung nach oben offener Gefäße in einem rechtwinkligen Raster, **dadurch gekennzeichnet, dass** das Raster von Gefäßen an zwei gegenüber liegenden Seiten durch statische Seitenwände (B) begrenzt wird, zwischen denen es als ganzes mit den dazu senkrechten anderen beiden Seitenwänden (A) verschiebbar ist, und es mindestens eine Position gibt, an der die statischen Seitenwände an gegenüber liegenden Stellen durchbrochen sind und mindestens ein weiteres Gefäß mit einem Führungselement (C) in das Raster verschiebbar ist, welches gleichzeitig auf der gegenüber liegenden Seite zurück weicht, um das aus dem Raster herausgeschobene Gefäß aufzunehmen, und es bei Bedarf an anderer Stelle wieder in das Raster zu schieben, und somit die Gefäße sukzessiv zu permutieren.

2. Vorrichtung nach Anspruch 1, **dadurch gekennzeichnet, dass** das Raster als Ganzes auf einem Schlitten zwischen den statischen Seitenwänden verschiebbar ist.

3. Vorrichtung nach Anspruch 2, **dadurch gekennzeichnet, dass** der Schlitten mit Nuten senkrecht zu seiner Bewegungsrichtung versehen ist, und die Gefäße mit entsprechenden Stiften somit nur auf diese Bewegungsrichtung auf dem Schlitten beschränkt sind.

4. Vorrichtung nach einem der vorhergehenden Ansprüche, **dadurch gekennzeichnet, dass** die Gefäße zylindersymmetrisch sind.

5. Vorrichtung nach einem der vorhergehenden Ansprüche, **dadurch gekennzeichnet, dass** das Rastermaß des Rasters von Gefäßen dem Rastermaß eines Rasters von Dispensionswerkzeugen entspricht, welche dadurch gleichzeitig beladen werden können.
